# EUROPÄISCHE PATENTSCHRIFT

(11) **EP 1 035 415 B1**
(45) Veröffentlichungstag und Bekanntmachung des Hinweises auf die Patenterteilung: **22.10.2003**
(21) Anmeldenummer: 98109799.1
(22) Anmeldetag: 28.05.1998
(51) Int. Cl.: G01P 21/00

(54) **Verfahren und Vorrichtung zum Testen eines Beschleunigungsschalters**
Process and device for testing an acceleration switch
Procédé et dispositif pour vérifier le fonctionnement d'un interrupteur d'accélération

(43) Veröffentlichungstag der Anmeldung: 13.09.2000
(73) Patentinhaber: SIEMENS AKTIENGESELLSCHAFT, 80333 München (DE)
(72) Erfinder: Baumgartner, Walter, 93197 Zeitlarn (DE); Bauer, Klaus, 93053 Regensburg (DE); Hermann, Stefan, 93096 Köfering (DE)

(56) Entgegenhaltungen:
- EP-A- 0 785 112
- DE-A- 3 627 241
- US-A- 5 112 080
- US-A- 5 182 459
- US-A- 5 363 303

## Beschreibung

Die Erfindung betrifft ein Verfahren und eine Vorrichtung zum Testen eines insbesondere in einem Kraftfahrzeug-Insassenschutzsystem vorhandenen Beschleunigungsschalters.

Aus der DE 44 25 846 A1 ist ein Kraftfahrzeug-Insassenschutzsystem bekannt, bei dem zusätzlich zu ausgelagerten, zur Seitenaufprallerkennung dienenden Beschleunigungssensoren (Satelliten) ein Beschleunigungssensor zentral im Kraftfahrzeug angeordnet ist, der aus beiden seitlichen Richtungen einwirkende Fahrzeugkollisionen erfaßt und folglich bidirektional wirkt. Die Ausgangssignale der Beschleunigungssensoren werden mit Schwellwerten zur Steuerung der Airbagauslösung verglichen.

In vereinfachter Ausgestaltung kann das Ausgangssignal des zentralen, bidirektionalen Beschleunigungssensors mit einem positiven und einem negativen Schwellwert verglichen werden und bei betragsmäßiger Überschreitung eines dieser Schwellwerte ein Freigabesignal an einen im Zündkreis vorhandenen Schalter abgegeben werden, so daß der Schalter schließt. Damit läßt sich eine sogenannte Safing-Funktion ohne aufwendige algorithmische Verarbeitung des Beschleunigungssensor-Ausgangssignals erreichen.

Es sind bidirektionale Beschleunigungssensoren bekannt, die mit einer Testelektrode zur Überprüfung der korrekten Auslenkung, und damit der Funktionsweise des bidirektionalen Beschleunigungssensors, ausgestattet sind. Mit dieser Testelektrode läßt sich jedoch die seismische Masse des Sensors nur in einer der beiden Empfindlichkeitsrichtungen auslenken. Bei einem Test wird die seismische Masse in der vorgesehenen Richtung ausgelenkt und somit der dieser Richtung zugeordnete Vergleicher aufgrund des Sensor-Ausgangssignals umgeschaltet, so daß als Folge hiervon der im Zündkreis vorhandene Schalter durchgeschaltet wird. Durch Überprüfung des Schalterzustands läßt sich somit die Funktionsweise des Beschleunigungssensors, des einen Vergleichers und des Schalters überprüfen, jedoch nicht der andere, beispielsweise dem negativen Schwellwertvergleich zugeordnete, Vergleicher testen.

Der Erfindung liegt die Aufgabe zugrunde, ein Verfahren und eine Vorrichtung zum Testen eines Beschleunigungsschalters zu schaffen, die eine zuverlässige Testung der Beschleunigungsschalter-Komponenten ermöglichen.

Die Aufgabe wird mit den in den Patentansprüchen 1 bzw. 6 genannten Merkmalen gelöst.

Vorteilhafte Ausgestaltungen der Erfindung sind in den Unteransprüchen angegeben.

Bei der Erfindung werden die Vergleicher-Eingangssignale so umgeschaltet, daß beide Vergleicher bei korrekter Funktionsweise zeitversetzt umgeschaltet werden. Die durch die sequentiellen Vergleicherausgangssignale bedingten Umschaltungen des im Zündkreis enthaltenen Schalters erlauben eine Überprüfung der Funktionsfähigkeit beider Vergleicher und der zugehörigen, vor-und nachgeschalteten Komponenten.

Die Schaltertestphase weist folglich zwei Abschnitte auf, in denen zunächst der eine Vergleicher und dann der andere Vergleicher getestet und jeweils der Schalterzustand des im Zündkreis liegenden Schalters abgefragt wird. Die Umschaltung zwischen den Vergleicher-Testabschnitten läßt sich in unterschiedlicher Weise erreichen. Beispielsweise können die Vergleicher-Schwellwerte während der Generierung des Sensorausgangssignals so umgeschaltet werden, daß sich ihre betragsmäßige Relation zum Sensor-Ausgangssignal umkehrt und damit der bislang das Schalter-Aktivierungssignal generierende Vergleicher abschaltet, wohingegen der bislang inaktive Vergleicher nun das Schalter-Aktivierungssignal erzeugt. Alternativ können die Schwellenwerte auch unmittelbar aus dem Sensor-Ausgangssignal erzeugt werden, was den Vorteil einer automatischen potentialmäßigen Anpassung an das Sensor-Ausgangssignalpotential bringt, so daß eine automatische Offset-Kompensation erreicht wird. Als Beispiel kann das Sensor-Ausgangssignal einer Frequenzfilterung, Differenzierung oder Zeitverzögerung unterzogen werden, so daß das Zeitverhalten und der Potentialverlauf der Schwellwerte zumindest während steiler Signalflanken kurzzeitig von dem an die anderen Vergleichereingänge angelegten Sensor-Ausgangssignal abweicht und somit die beiden Vergleicher zeitversetzt zumindest kurzzeitig durchschalten und damit den im Zündkreis angeordneten Schalter in überprüfbarer Weise einschalten.

Alternativ kann auch das Sensor-Ausgangssignal umgeformt werden, wobei die Vergleicher-Schwellwerte in diesem Fall konstant gehalten werden können. Das Sensor-Ausgangssignal kann gemäß einer Alternative über ein Hochpaßfilter,' insbesondere in Form einer Serienkapazität mit gegen Referenzpotential (Masse) geschaltetem Widerstand, geführt werden, so daß bei der ansteigenden und abfallenden Flanke des Sensor-Ausgangssignals positive und negative Impulse generiert werden, die an die beiden Vergleicher angelegt werden. Bei dem positiven Impuls spricht der eine Vergleicher an, während beim negativen Impuls der andere Vergleicher aktiviert wird. Hierdurch läßt sich ein zeitversetztes, nicht überlappendes Schalten der Vergleicher und damit eine unabhängige Überprüfung beider Vergleicher gewährleisten.

Die Erfindung eignet sich allgemein zum Testen von Sensoren, die während des normalen Betriebs ein bipolares Signal generieren können, das an zwei Vergleicher zur Erfassung des Überschreitens eines positiven Schwellwerts oder des Unterschreitens eines negativen Schwellwerts und zum Durchschalten eines nachgeschalteten Schalters angelegt wird. Selbst wenn der Schalter beim Test nur ein Signal der einen Polarität generiert, kann durch die erfindungsgemäße Vorgehensweise auch der andere, normalerweise nicht durchschaltende Vergleicher aktiviert und damit getestet werden. Vorzugsweise gelangt die Erfindung bei einem Kraftfahrzeug-Insassenschutzsystem, insbesondere einem Airbagsystem (Seiten-Airbagsystem und/oder Front-Airbagsystem) und/oder einem Gurtstrammersystem zum Einsatz. In diesem Fall ist im Zündkreis noch mindestens ein weiterer Schalter angeordnet, der von der elektronischen Steuereinrichtung in Abhängigkeit von den zusätzlich vorgesehenen Beschleunigungssensoren, z.B. den ausgelagerten Beschleunigungssensoren zur Seitenaufprallerkennung, gesteuert wird.

Die Erfindung wird nachstehend anhand von Ausführungsbeispielen unter Bezugnahme auf die Zeichnungen näher beschrieben.
- Fig. 1: zeigt ein erstes Ausführungsbeispiel der Beschleunigungsschalter-Testvorrichtung,
- Fig. 2: zeigt ein zweites Ausführungsbeispiel der Beschleunigungsschalter-Testvorrichtung,
- Fig. 3: zeigt ein Ablaufdiagramm des Beschleunigungsschaltertests und
- Fig. 4: zeigt beim Schaltertest auftretende Signalverläufe.

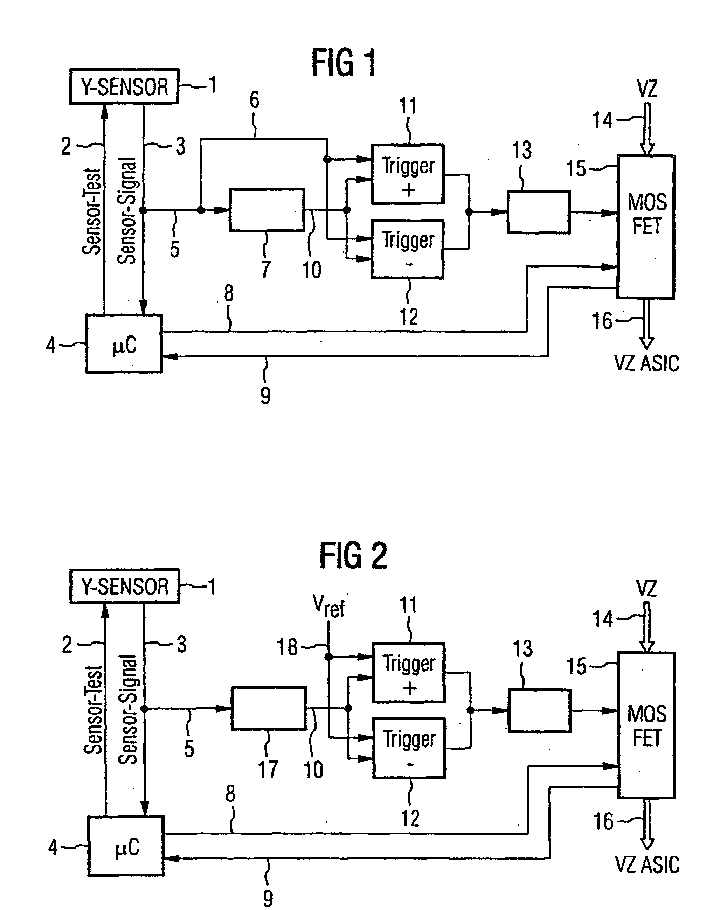

Das in Fig. 1 gezeigte Ausführungsbeispiel enthält einen bidirektionalen Beschleunigungssensor (Y-Sensor) 1, der eine einwirkende Beschleunigung in zwei Richtungen, z.B. seitlich von links und rechts, erfaßt und z.B. im Fahrzeugzentrum eingebaut ist. Der Sensor 1 erzeugt auf einer Ausgangsleitung 3 ein Ausgangssignal, dessen Polarität die Beschleunigungsrichtung und dessen Amplitude die Beschleunigungsgröße anzeigt und das an einen Mikroprozessor 4 zur Auswertung angelegt wird. Der Mikroprozessor 4 stellt einen Bestandteil des Steuergeräts des Insassenschutzsystems, insbesondere Airbag-Systems, dar, und erzeugt nach jeder Initialisierung (Hochlaufen) und/oder in regelmäßigen oder unregelmäßigen Zeitabständen ein Testsignal (Sensor-Test), das über eine Leitung 2 an eine Testelektrode des Sensors 1 anlegbar ist und bei korrekter Sensorfunktionsweise eine definierte Auslenkung der seismischen Masse des Sensors 1 in eine bestimmte Richtung und mit einer bestimmten Größe bewirkt. Beim Anlegen des Testsignals 2 ist bei korrekter Funktionsweise auf der Leitung 3 ein definiertes Sensor-Ausgangssignal zu erwarten.

Das Sensor-Ausgangssignal wird über eine mit der Leitung 3 verbundene Leitung 5 und eine mit der Leitung 5 verbundene Leitung 6 an jeweils einen Eingang zweier Vergleicher 11 und 12 angelegt, an deren anderen Eingängen jeweils ein als Schwellwert dienendes Referenzpotential (über eine Leitung 10) angelegt ist. Wenn das Signal auf der Leitung 6 größer (zumindest um einen gewissen Wert) ist als das Signal auf der Leitung 10, schaltet der Vergleicher 11 durch und erzeugt ein definiertes, beispielsweise positives Ausgangssignal (hoher Pegel), wohingegen das Ausgangssignal des Vergleichers 12 unverändert, beispielsweise bei Nullpotential, bleibt (niedriger Pegel). Wenn demgegenüber das Potential des Signals auf der Leitung 6 um einen gewissen, von dem Schaltverhalten der Vergleicher abhängigen Wert unterhalb des Potentials des Signals auf der Leitung 10 liegt, schaltet nun der Vergleicher 12 durch und erzeugt ein definiertes Ausgangssignal (hoher Pegel), wohingegen der Vergleicher 11 in diesem Fall nicht durchgeschaltet ist oder wird und ein bei definiertem Potential, beispielsweise Nullpotential, liegendes Ausgangssignal (niedriger Pegel) generiert. Die Ausgangssignale der Vergleicher 11 und 12 werden zusammengefaßt und über eine Schaltung 13, die beispielsweise eine zumindest kurzzeitige Haltefunktion besitzt, an einen im Zündkreis 14, 16 des Insassenschutzsystems liegenden Schalter 15 in Form eines MOS-FETs oder in sonstiger geeigneter Ausführungsform angelegt.

Wenn der Beschleunigungssensor 1 während des normalen Kraftfahrzeug-Fahrbetriebs eine Beschleunigung erfaßt, die in einer seiner beiden Detektionsrichtungen einwirkt, und die Beschleunigung einen gewissen Amplitudenwert (positiv oder negativ) überschreitet, schaltet einer der Vergleicher 11 und 12 durch, so daß der Schalter 15 geschlossen wird. Die tatsächliche Aktivierung der im Zündkreis vorhandenen Zündpille hängt dann von dem Schaltzustand des oder der weiteren, im Zündkreis angeordneten und von dem Mikroprozessor 4 oder einer sonstigen Steuerkomponente gesteuerten Schalter ab. Der Beschleunigungsschalter 1 bis 15 dient somit als Safing-Sensor, der eine Durchschaltung des zugehörigen Schalters 15 unabhängig von einem Mikroprozessoreingriff steuert.

Wenn ein Beschleunigungsschalter-Test, z.B. nach Initialisierung des Mikroprozessors 4, nach Einschalten der Kraftfahrzeug-Zündung oder aufgrund eines anderen Kriteriums durchgeführt werden soll, erzeugt der Mikroprozessor 4 auf der Leitung 2 das Testsignal, so daß einer der Vergleicher 11 oder 12 durchschalten und damit der Schalter 15 aktiviert werden sollte. Zugleich legt der Mikroprozessor 4 über eine Leitung 8 ein eine Schalterzustandsmessung ermöglichendes Signal an den Schalter 15 an, durch das beispielsweise der Drainanschluß des Schalters 15 mit einer gewissen Spannung beaufschlagt wird. Zur Messung des aktuellen Schalterzustands ist eine Leitung 9 vorgesehen, die mit dem Schalter, z. B. dessen Sourceanschluß, verbunden ist und an einen Eingang des Mikroprozessors 4 angeschlossen ist. Wenn der Sensor 1, der Vergleicher 11 oder 12, die Schaltung 13 und der Schalter 15 bei diesem Test korrekt arbeiten, tritt auf der Leitung 9 eine entsprechende Spannungsänderung auf, die vom Mikroprozessor 4 detektierbar ist und das korrekte Arbeiten des Beschleunigungsschalters bestätigt. Die Schaltung 13 kann bei dem gezeigten Ausführungsbeispiel an die Gateelektrode des MOSFET-Schalters 15 angeschlossen sein.

Damit bei dem Beschleunigungsschaltertest auch der andere Vergleicher (12 oder 11) und/oder die korrekte Stellwertfestlegung der Vergleicher-Schwellwerte getestet werden können, ist bei dem in Fig. 1 gezeigten Ausführungsbeispiel eine spezielle Schwellwertgenerierung mittels einer Schaltung 7 vorgesehen. Diese spezielle Schwellwertgenerierung ist im übrigen nicht nur bei einem Schaltertest, sondern auch unabhängig hiervon während des normalen Sensorbetriebs vorteilhaft und besteht darin, daß die Schwellwerte aus dem Sensorausgangssignal gewonnen werden. Das Sensorausgangssignal wird über die Leitung 5 an die Schaltung 7 angelegt, die z. B. als Glättungsschaltung ausgebildet ist und beispielsweise einen zwischen die Leitung 5 und Massepotential geschalteten Kondensator mit Vorwiderstand enthält. Dieses RC-Glied bewirkt, daß das auf der Leitung 10 abgegebene Ausgangssignal mit einer gewissen Zeitverzögerung dem Sensor-Ausgangssignal auf der Leitung 6 nachfolgt und damit die an die Vergleicher 11 und 12 angelegten Vergleichs-Schwellwerte adaptiv nachstellt. Wenn sich das Sensorausgangssignal beispielsweise stark oder sprunghaft mit einem gewissen Amplitudensprung ändert, spricht einer der Vergleicher 11 und 12 solange an, bis sich das Ausgangssignal auf der Leitung 10 der Amplitude auf der Leitung 6 wieder weitgehend angenähert hat. Bei einem positiven Amplitudensprung spricht somit der Vergleicher 11 kurzzeitig an, während bei einem negativen Amplitudensprung der Vergleicher 12 für ein gewisses Zeitintervall durchgeschaltet wird. Eine durch das Einschalten des Sensor-Testsignals auf der Leitung 2 hervorgerufene positive Flanke des auf der Leitung 3 auftretenden Beschleunigungssensor-Ausgangsimpulses führt somit zu einem kurzzeitigen Durchschalten des Vergleichers 11 und damit zu einem kurzzeitigen Durchschalten des Schalters 15. Wenn dann das Sensor-Testsignal auf der Leitung 2 wieder ausgeschaltet wird, kehrt das Sensor-Ausgangssignal auf den Leitungen 3, 5 und 6 wieder sprunghaft auf den Ruhewert zurück, so daß eine abfallende Impulsflanke vorliegt. Da das von der Glättungsschaltung 7 auf der Leitung 10 erzeugte Schwellwertpotential sich aber bereits dem bislang vorhandenen positiven Amplitudenwert des Sensorausgangssignals weitgehend angenähert hat, spricht nun der Vergleicher 12 an und erzeugt kurzzeitig (bis zur adaptiven Nachstellung des Ausgangssignals auf der Leitung 10, d.h. des Schwellwerts) ein Ausgangssignal, das ein erneutes, kurzzeitiges Durchschalten des Schalters 15 bewirkt.

Anstelle einer Glättungsschaltung 7 kann auch ein reines Zeitverzögerungsglied, ein Tiefpaßfilter oder eine sonstige Komponente vorgesehen sein, die bewirkt, daß sich die Schwellwerte adaptiv, mit einer gewissen Zeitverzögerung, an den aktuellen Sensorausgangssignalpegel annähern. Allgemein gesprochen, kann zwischen dem Beschleunigungssensor 1 und den Vergleichern 11 und 12 ein Hochpaß eingefügt sein, der in der Praxis z. B. durch einen rückgekoppelten Verstärker mit Hochpaßverhalten realisiert werden kann. Infolge der Hochpaßfunktion rufen sowohl die positive als auch die negative Schaltflanke des Testimpulses für den Beschleunigungssensor 1 ein positives Signal an dem einen Vergleicher bzw. ein negatives Signal an dem anderen Vergleicher hervor, so daß trotz der Test-Auslenkung des Sensors 1 in nur einer Richtung beide Vergleicher zeitlich versetzt wirksam getestet werden können. Das Testresultat läßt sich jeweils an dem geschlossenen (oder offenen) Zustand des im Zündkreis liegenden Schalters 15 erkennen. Nach Anlegen des Testimpulses an den Beschleunigungssensor 1 und Überprüfung der bei einem funktionierenden System zu erwartenden, geschlossenen Schalterstellung des Schalters 15 wird der an den Beschleunigungssensor 1 angelegte Testimpuls wieder abgeschaltet und daraufhin der Schalter 15 erneut auf seinen geschlossenen Zustand hin überprüft. Gegebenenfalls kann zusätzlich überprüft werden, ob der Schalter 15 im Bereich zwischen der ansteigenden und abfallenden Flanke des Testimpulses planmäßig wieder öffnet.

In Fig. 2 ist ein abgeändertes Ausführungsbeispiel dargestellt, das weitgehend mit dem in Fig. 1 gezeigten Ausführungsbeispiel übereinstimmt, sich von diesem aber hinsichtlich der Eingangsbeschaltung der Vergleicher 11 und 12 unterscheidet. Das Sensor-Ausgangssignal wird über eine Schaltung 17 an jeweils einen Eingang der Vergleicher 11 und 12 angelegt. Die Vergleichs-Schwellwerte für die Vergleicher 11 und 12 sind hierbei auf einen bestimmten, konstanten Wert V_{ref} festgelegt, der über eine Leitung 18 zu den Vergleichs-Eingangsanschlüssen der Vergleicher 11 und 12 geleitet wird. Die Leitung 6 des ersten Ausführungsbeispiels ist entfallen, und es ist die Schaltung 7 durch die Schaltung 17 ersetzt, die durch ein Hochpaßfilter, einen Differenzierer oder eine sonstige Schaltungskomponente gebildet ist, die bei einer positiven Flanke des auf der Leitung 3 auftretenden Sensor-Ausgangsimpulses zumindest kurzzeitig einen positiven Ausgangsimpuls generiert und bei der abfallenden Flanke des Sensor-Ausgangsimpulses einen negativen Impuls erzeugt. Das Ausgangssignal der Schaltung 17 wird, wie auch bei dem ersten Ausführungsbeispiel, über die Leitung 10 an die Vergleichereingänge der Vergleicher 11 und 12 angelegt. Wenn auf der Leitung 10 ein positiver Impuls (bei einer ansteigenden Flanke des Sensor-Ausgangsimpulses auf der Leitung 3) generiert wird, erzeugt der Vergleicher 11 ein kurzzeitiges Ausgangssignal, das zum Durchschalten des Schalters 15 führt. Wenn demgegenüber auf der Leitung 10 ein negativer Impuls (bei der abfallenden Flanke des Sensor-Ausgangsimpulses) erzeugt wird, wechselt demgegenüber der Vergleicher 12 kurzzeitig seinen Ausgangspegel, so daß der Schalter 15 erneut mindestens kurzfristig durchgeschaltet wird. Im übrigen ist die Funktionsweise die gleiche wie beim ersten Ausführungsbeispiel.

Die Schaltung 17 kann z.B. durch einen seriell zwischen die Leitungen 5 und 10 geschalteten Kondensator und einen Widerstand gebildet sein, der zwischen die Leitung 10 und Schaltungsnull geschaltet ist.

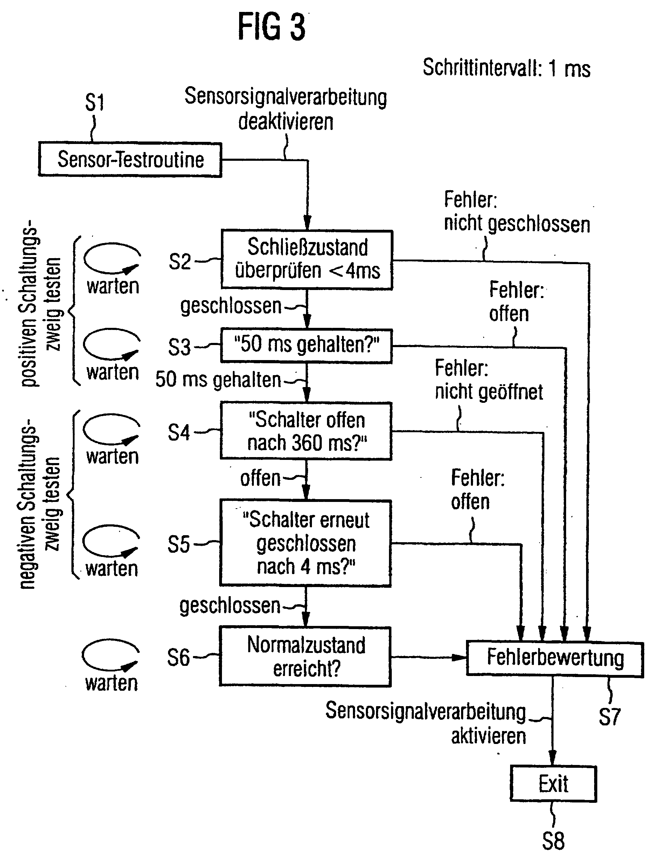

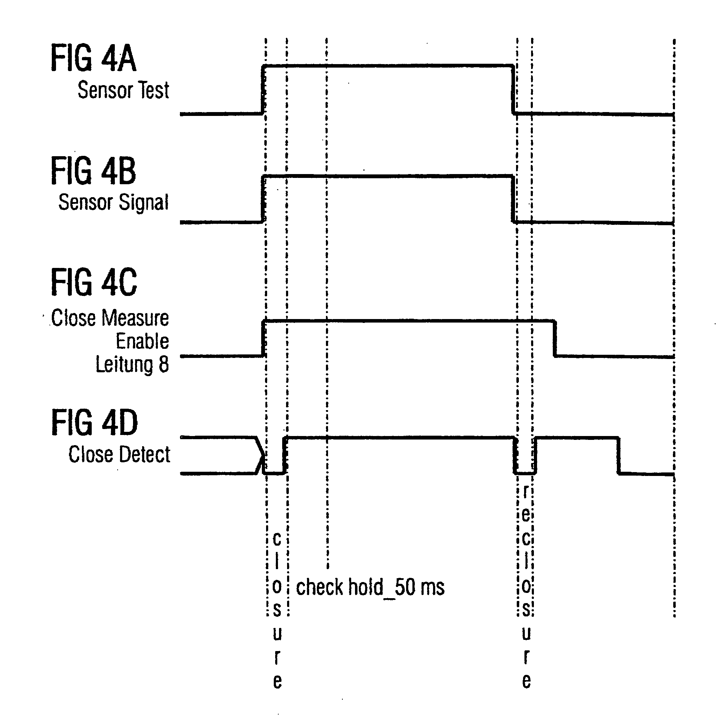

Die Arbeitsweise der erfindungsgemäßen Schaltertestvorrichtung wird im folgenden unter Bezugnahme auf die Fig. 3 und 4 näher erläutert. Der Mikroprozessor 4 führt die Verarbeitung hierbei in Zeitschritten von 1 ms durch. Während des Schaltertests erzeugt der Mikroprozessor 4 auf der Leitung 2 ein Rechtecksignal konstanter Amplitude, das bei Beginn des Sensortests erzeugt, jedoch bereits vor dem Ende des Sensortests beendet wird. Dieses Signal ist in Fig. 4(a) dargestellt. Das als Reaktion auf das Testsignal vom Sensor 1 auf der Leitung 3 erzeugte Sensor-Ausgangssignal ist in Fig. 4(b) dargestellt und besitzt identischen Verlauf wie das Testsignal sowie eine zum Aktivieren der Vergleicher 11 und 12 ausreichende Amplitude. Ferner erzeugt der Mikroprozessor 4 auf der Leitung 8 während des gesamten Testzyklus ein vom Beginn bis zum Ende des Testzyklus reichendes, an den Schalter 15 angelegtes Signal, das in Fig. 4(c) gezeigt ist. Fig. 4(c) zeigt, daß der Abschluß des Testzyklus erst einige Zeit nach der abfallenden Flanke des Sensorsignals (Fig. 4(b)) liegt. In Fig. 4(d) ist der bei korrekter Funktionsweise zu erwartende Verlauf des Schaltzustands des Schalters 15 dargestellt, wobei der durch die Schaltung 13 bewirkte Halteeffekt, der eine Verlängerung der Schließzeiten des Schalters 15 bewirkt, nicht berücksichtigt ist. In Fig. 4(d) bezeichnet der niedrige Pegel den geschlossenen Schalterzustand, wohingegen der hohe Pegel den geöffneten Schalter signalisiert. Der in Fig. 4(d) gezeigte Signalverlauf entspricht hierbei, zumindest während des hohen Pegels des Signals gemäß Fig. 4(c), dem kombinierten Ausgangssignal der Vergleicher 11 und 12 in invertierter Form.

Gemäß Fig. 3 wird bei einem Schritt S1 der Schaltertest eingeleitet und hierbei das Sensor-Testsignal auf der Leitung 2 aktiviert und zugleich die Verarbeitung des Sensorausgangssignals (auf der Leitung 3) durch den Mikroprozessor 4 deaktiviert. Bei dem Schritt S2 wird innerhalb eines Zeitabstands von weniger als z.B. 10 ms, vorzugsweise weniger als 4 ms nach dem Schaltertestbeginn überprüft, ob der Schalter 15 geschlossen ist. Hierdurch läßt sich nicht nur das korrekte Funktionieren der Schaltungskomponenten, sondern auch deren ausreichend rasches Zeitverhalten bestätigen. Bei einem Schritt S3 wird nach einer weiteren Wartezeit von beispielsweise 50 ms überprüft, ob der Schalter 15 noch geschlossen ist. Dies ermöglicht eine Überprüfung der Funktion der Halteschaltung 13, die eine solche Minimal-Schließzeitdauer des Schalters 15 gewährleisten soll. Bei dem nachfolgenden Schritt S4 wird zu einem Zeitpunkt, bei dem der Schalter 15 aufgrund des Hochpaßverhaltens der zwischen der Schaltung 3 und dem Schalter 15 vorhandenen Schaltungskomponenten bereits wieder geöffnet haben sollte, überprüft, ob der Schalter 15 tatsächlich geöffnet ist. Diese Überprüfung kann z.B. nach einem Zeitraum von 200 bis 400 ms nach dem Schritt S3 durchgeführt werden.

Unmittelbar nach der abfallenden Flanke des Sensortestsignals (auf der Leitung 2) wird dann bei einem Schritt S5 überprüft, ob der Schalter 15 erneut durchgeschaltet hat, was durch den auf die negative Impulsflanke ansprechenden, anderen Vergleicher 12 getriggert werden sollte. Diese Überprüfung kann beispielsweise innerhalb eines Zeitraums von weniger als 4 bis 5 ms nach dem Ende des Sensor-Testsignals ausgeführt werden.

Bei einem Schritt S6 wird zu einem späteren Zeitpunkt, z.B. nach weiteren 100 ms, überprüft, ob der Schalter 15 nun wieder geöffnet ist, was aufgrund des zwischenzeitlichen Abklingens aller Aktivierungssignale der Fall sein sollte. Wenn bei den Schritten S2 bis S6 jeweils Fehler detektiert werden sollten, wird zu einem Schritt S7 übergegangen, bei dem die Art des Fehlers näher analysiert wird. Vom Schritt S6 wird auch dann, wenn kein Fehler detektiert wird, auf den Schritt S7 übergegangen, dann aber ohne Fehlermeldung. Bei einem Schritt S8 wird die Testroutine verlassen und die Auswertung des Sensor-Ausgangssignals auf der Leitung 3 seitens des Mikroprozessors 4 wieder aufgenommen.

## Patentansprüche

1. Vorrichtung, insbesondere Kraftfahrzeug-Insassenschutzsystem, mit einem Beschleunigungsschalter, der einen bidirektionalen Beschleunigungssensor (1), zwei das Beschleunigungssensor-Ausgangssignal mit Schwellwerten vergleichende Vergleicher (11, 12) und einen in Abhängigkeit von den Vergleicher-Ausgangssignalen gesteuerten Schalter (15) aufweist, mit einer Steuereinrichtung (4) zum Anlegen eines Testsignals an den Beschleunigungssensor (1) und zum Auswerten des als Reaktion auf das Testsignal erhaltenen Schalterzustands, und mit einer Schaltungsanordnung (7; 17), die das Sensor-Ausgangssignal und/oder die Vergleicher-Schwellwerte derart umformt, daß beide Vergleicher (11, 12) zeitversetzt aktiviert werden.

2. Vorrichtung nach Anspruch 1, **dadurch gekennzeichnet, daß** die Schaltungsanordnung (7) die Vergleicher-Schwellwerte generiert.

3. Vorrichtung nach Anspruch 1 oder 2, **dadurch gekennzeichnet, daß** die Schaltungsanordnung (7) die Schwellwerte in Abhängigkeit von dem Sensor-Ausgangssignal erzeugt.

4. Vorrichtung nach einem der vorhergehenden Ansprüche, **dadurch gekennzeichnet, daß** die Schaltungsanordnung (7; 17) das Sensor-Ausgangssignal eingangsseitig empfängt und eine Glättungsschaltung, eine Tiefpaßfilterschaltung, eine Differenzierschaltung oder eine Zeitverzögerungsschaltung enthält, durch die das Sensor-Ausgangssignal geleitet wird.

5. Vorrichtung nach einem der vorhergehenden Ansprüche, **dadurch gekennzeichnet, daß** die Schaltungsanordnung (7; 17) ein Hochpaßfilter, insbesondere einen in Serie geschalteten Kondensator und einen gegen Schaltungs-Nullpotential geschalteten Widerstand, enthält, das zwischen den Beschleunigungssensor-Ausgang und die Vergleicher-Eingänge geschaltet ist.

6. Verfahren zum Testen eines Beschleunigungsschalters, insbesondere eines in einem Kraftfahrzeug-Insassenschutzsystem enthaltenen Beschleunigungsschalters, der einen bidirektionalen Beschleunigungssensor (1), zwei das Ausgangssignal des Beschleunigungssensors (1) mit Schwellwerten vergleichende Vergleicher (11, 12) und einen Schalter (15) enthält, der in Abhängigkeit von den Ausgangssignalen der Vergleicher (11, 12) angesteuert wird,
bei dem zum Testen des Beschleunigungsschalters ein Testsignal an den Beschleunigungssensor (1) angelegt wird, das zur Erzeugung eines Beschleunigungssensor-Ausgangssignals führt,
bei dem das Beschleunigungssensor-Ausgangssignal und/oder die Vergleicher-Schwellwerte während des Tests so umgeformt werden, daß bei korrekter Beschleunigungsschalter-Funktionsweise beide Vergleicher (11, 12) zeitversetzt ansprechen, und
bei dem der Schalterzustand nach jedem bei korrekter Funktionsweise zu erwartenden Ansprechen der Vergleicher (11, 12) abgefragt wird.

7. Verfahren nach Anspruch 6, **dadurch gekennzeichnet, daß** das Beschleunigungssensor-Ausgangssignal einer Hoch- oder Tiefpaßfilterung oder einer Differenzierung zur Erzeugung eines einen positiven und einen negativen Impuls enthaltenden, an die Vergleicher (11, 12) angelegten Signals unterzogen wird.

8. Verfahren nach Anspruch 6 oder 7, **dadurch gekennzeichnet, daß** die Vergleicher-Schwellwerte aus dem Beschleunigungssensor-Ausgangssignal durch Glättung, Tiefpaßfilterung, Differenzierung oder Zeitverzögerung gewonnen werden.

9. Verfahren nach einem der Ansprüche 6 bis 8, **dadurch gekennzeichnet, daß** der Schalterzustand zu einem zwischen den Ansprechzeiten der beiden Vergleicher (11, 12) liegenden Zeitpunkt überprüft und bei geschlossenem Schalter eine Fehlermeldung generiert wird.

## Claims

1. Device, in particular a vehicle occupant protection system, with an acceleration switch, which has a bi-directional acceleration sensor (1), two comparators (11, 12) comparing the acceleration sensor output signal with threshold values, and a switch (15) controlled on the basis of the comparator output signals, with a control device (4) to supply a test signal to the acceleration sensor (1) and to analyse the switch status received in response to the test signal, and with a circuit arrangement (7; 17), which converts the sensor output signal and/or the comparator threshold values such that both comparators (11, 12) are activated with a time delay in respect of each other.

2. Device according to Claim 1, **characterised in that** the circuit arrangement (7) generates the comparator threshold values.

3. Device according to Claim 1 or 2, **characterised in that** the circuit arrangement (7) generates the threshold values on the basis of the sensor output signal.

4. Device according to one of the preceding claims, **characterised in that** the circuit arrangement (7; 17) receives the sensor output signal on the input side and contains a smoothing circuit, a deep-pass filter circuit, a differentiation circuit or a time delay circuit, through which the sensor output signal is passed.

5. Device according to one of the preceding claims, **characterised in that** the circuit arrangement (7; 17) contains a high-pass filter, in particular a capacitor connected in series and a resistor connected counter to circuit zero potential, which is connected between the acceleration sensor output and the comparator inputs.

6. Method for testing an acceleration switch, in particular an acceleration switch contained in a vehicle occupant protection system, with a bi-directional acceleration sensor (1), two comparators (11, 12) comparing the output signal of the acceleration sensor (1) with threshold values, and a switch (15), which is activated on the basis of the output signals from the comparators (11, 12), in which a test signal is supplied to the acceleration sensor (1) to test the acceleration switch, resulting in the generation of an acceleration sensor output signal,
in which the acceleration signal output signal and/or the comparator threshold values are converted during the test such that both comparators (11, 12) respond with a time delay in respect of each other when the acceleration switch is operating correctly, and
in which the switch status is detected after every response on the part of the comparators (11, 12) as can be expected when the mode of operation is correct.

7. Method according to Claim 6, **characterised in that** the acceleration output signal is subject to high or deep-pass filtering or differentiation to generate a signal containing a positive and a negative pulse, which is supplied to the comparators (11, 12).

8. Method according to Claim 6 or 7, **characterised in that** the comparator threshold values are obtained from the acceleration sensor output signal by smoothing, deep-pass filtering, differentiation or time delay.

9. Method according to one of Claims 6 to 8, **characterised in that** the switch status is verified at a time between the response times of the two comparators (11, 12) and an error message is generated if the switch is closed.

## Revendications

1. Dispositif, en particulier système de protection des passagers pour véhicule automobile, comprenant un commutateur d'accélération qui présente un capteur d'accélération bidirectionnel (1), deux comparateurs (11, 12) comparant le signal de sortie du capteur d'accélération à des valeurs de seuil ainsi qu'un commutateur (15) commandé en fonction des signaux de sortie des comparateurs, et un dispositif de commande (4) destiné à délivrer un signal de test sur le capteur d'accélération (1) et à évaluer l'état du commutateur obtenu en réaction au signal de test, et comprenant un circuit (7, 17) qui convertit le signal de sortie du capteur et/ou les valeurs de seuil des comparateurs de telle sorte que les deux comparateurs (11, 12) sont activés avec un décalage temporel donné.

2. Dispositif selon la revendication 1, **caractérisé en ce que** le circuit (7) engendre les valeurs de seuil des comparateurs.

3. Dispositif selon la revendication 1 ou 2, **caractérisé en ce que** le circuit (7) engendre les valeurs de seuil en fonction du signal de sortie du capteur.

4. Dispositif selon l'une des revendications précédentes, **caractérisé en ce que** le circuit (7, 17) reçoit, du côté de son entrée, le signal de sortie du capteur et **en ce qu'**il comprend un circuit de lissage, un circuit passe-bas, un circuit différentiateur ou un circuit à retard, à travers lequel le signal de sortie du capteur est conduit.

5. Dispositif selon l'une des revendications précédentes, **caractérisé en ce que** le circuit (7, 17) comprend un filtre passe-haut, en particulier un condensateur connecté en série et une résistance connectée au potentiel zéro de commutation, ledit filtre étant connecté entre la sortie du capteur d'accélération et les entrées des comparateurs.

6. Procédé destiné à tester un commutateur d'accélération, en particulier un commutateur prévu dans un système de protection des passagers pour véhicule automobile, lequel comprend un capteur d'accélération bidirectionnel (1), deux comparateurs (11, 12) comparant le signal de sortie du capteur d'accélération (1) à des valeurs de seuil et un commutateur (15) qui est commandé en fonction des signaux de sortie des comparateurs (11, 12),
lors duquel, pour tester le commutateur d'accélération, un signal de test est délivré sur le capteur d'accélération (1) qui provoque la création d'un signal de sortie du capteur d'accélération,
lors duquel le signal de sortie du capteur d'accélération et/ou les valeurs de seuil des comparateurs sont convertis pendant le test de telle sorte que, lors du fonctionnement correct du commutateur d'accélération, les deux comparateurs (11, 12) réagissent avec un décalage temporel donné, et
lors duquel l'état du commutateur est interrogé à chaque fois que, en cas de fonctionnement correct, les comparateurs (11, 12) sont censé réagir.

7. Procédé selon la revendication 6, **caractérisé en ce que** le signal de sortie du capteur d'accélération est soumis à un filtrage passe-haut ou passe-bas ou bien à une différentiation destiné(e) à engendrer un signal délivré sur les comparateurs (11, 12) et comprenant une impulsion positive et une impulsion négative.

8. Procédé selon la revendication 6 ou 7, **caractérisé en ce que** les valeurs de seuil des comparateurs sont obtenues, par lissage, filtrage passe-bas, différentiation ou mise en retard, à partir du signal de sortie du capteur d'accélération.

9. Procédé selon l'une des revendications 6 à 8, **caractérisé en ce que** l'état du commutateur est vérifié à un moment situé entre les temps de réaction respectifs des deux comparateurs (11, 12) et **en ce qu'**un message d'erreur est engendré lorsque le commutateur est fermé.
